Europäisches Patentamt

European Patent Office

Office européen des brevets

(19)

(11) Publication number: **0 143 609**
**A2**

(12) **EUROPEAN PATENT APPLICATION**

(21) Application number: **84308094.6**

(22) Date of filing: **22.11.84**

(51) Int. Cl.⁴: **G 11 B 23/023**

(30) Priority: **25.11.83 GB 8331470**

(43) Date of publication of application: **05.06.85**
**Bulletin 85/23**

(84) Designated Contracting States: **DE FR GB IT NL SE**

(71) Applicant: **Lucas Electrical Electronics & Systems
Limited, Well Street, Birmingham B19 2XF (GB)**

(72) Inventor: **Hill, Andrew Colin, 15 Nant Ffornwg
Llangewydd Court, Bridgend Mid Glamorgan (GB)**
Inventor: **Wilcox, Kenneth John, 22 Brynaweolnorad
Road, Cyncoed Cardiff (GB)**

(74) Representative: **Carpenter, David et al, Marks & Clerk
Alpha Tower Suffolk Street Queensway, Birmingham
B1 1TT (GB)**

(54) **Tape cassette container.**

(57) A tape cassette container having cassette receiving drawers (12) and spring means (19) for rejecting a cassette (13) in the open position of the drawers (12). The invention also resides in a cassette container having cassette receiving drawers (12) in a housing (11) and latch means including a resilient limb (21) on each drawer (12) engageable with a ramp (25) and a shoulder (26) on the housing (11).

"Tape Cassette Container"


This invention relates to a container for accommodating at least one tape cassette.

British Patent No. 1408516 discloses a well known tape cassette container comprising a housing supporting at least one tape cassette carrying slide. The slide is slidable relative to the housing between open and closed positions, and is spring urged to the open position in which the slide protrudes from the housing to provide access to a tape cassette supported by the slide. The slide comprises a base plate having front and rear upstanding walls, and the front upstanding wall includes a manually operable release member of a latch mechanism for holding the slide in the closed position.

Notwithstanding the fact that the slide does not have side walls it can nevertheless prove difficult to extract a cassette from the slide. Such tape cassette containers principally find use in vehicles, and clearly it is extremely disadvantageous for the driver of the vehicle to have to devote mental and visual attention to the extraction of a cassette from the slide.

British Patent No. 1422008 shows an alternative construction in which the cassette is carried in a pocket member pivotally mounted on the equivalent of the slide of 1408516. The pocket member is moved to present the cassette upwardly by engagement of a lever portion of the pocket member with the housing when the slide reaches its fully outward position. Such an arrangement is disadvantageous inter alia in that it is

0143609

- 2 -

dependent for its operation upon the slide reaching a particular position, and also is dependent upon the strength of the spring urging the slide outwardly or upon the outward momentum of the slide, since it is either the spring or the momentum which, acting through the lever arrangement, overcomes the weight of the pocket member and the cassette to pivot the member and cassette upwardly. Moreover the arrangement disclosed in 1422008 will be prone to rattling of the cassette in its pocket member in closed position and is further disadvantageous in that the pocket member is presented upwardly when the slide is moved to its outward position irrespective of the presence of a cassette in, or absence of a cassette from, the pocket member.

It is an object of the present invention to provide a tape cassette container wherein the aforementioned disadvantages are is minimized.

A tape cassette container in accordance with the present invention comprises a housing, a tape cassette receiving drawer mounted for sliding movement in the housing between an open position and a closed position, resilient means urging the drawer to its open position, latch means for retaining the drawer in its closed position, and further resilient means acting between the drawer and a tape cassette received therein for moving at least the front edge of the tape cassette upwardly to protrude above the upper edge of the front of the drawer when the drawer is in its open position, the tape cassette being depressed into the drawer by engagement with an abutment surface of the container during movement of the drawer towards its closed position.

Preferably said further resilient means includes leaf spring means.

Desirably said leaf spring means is integral with the drawer.

Alternatively said leaf spring means is secured to said drawer.

Conveniently said further resilient means comprises coil spring means.

Preferably said coil spring means includes a coil spring and a member interposed between the cassette and one end of the coil spring in use.

The automatic lifting of the tape cassette relative to its drawer as the drawer moves to its open position exposes the tape cassette so that it may be removed with a minimum of inconvenience by, for example, the driver of a vehicle. Moreover, since the tape cassette is automatically lifted it is not necessary to provide apertures, or total removal, of the side walls of the drawer as is the case with the arrangement disclosed in British Patent 1408516. Thus a more robust drawer construction can be provided.

A further disadvantage of the arrangement disclosed in British Patent 1408516 resides in the nature of the latch mechanism. Firstly the latch mechanism is released by manual operation of a release member forming a small part of the front wall of the slide. Thus the driver of the vehicle, or for that matter any other person wishing to extract a tape cassette, must actually look at the container in order to locate the release member. The disadvantage of this in a vehicle application is readily apparent. Moreover, actuation of the release member takes place against a resilient bias, and the latch member must be held released until the slide has been moved at least a short distance towards it open position. If this movement of the slide does not occur then immediately upon the operator removing pressure from the release member the release member will move back to its original position, relatching the slide. It is therefore necessary to balance the pressure applied to the release member against the spring force urging the slide towards its open position so that the latch is released, but the slide is permitted to move towards its open position. Naturally the manual dexterity necessary to perform this operation is relatively readily learned, but nevertheless the requirements do constitute a second disadvantage of the latch arrangement.

The construction disclosed in British Patent No. 1422008 may prove to be less susceptible to the problems mentioned above but utilizes a latch mechanism which is complex and thus is expensive to produce and susceptible to failure in use.

It is a further object of the present invention to provide a tape cassette container wherein these disadvantages are minimized.

A tape cassette container in accordance with a second aspect of the present invention comprises a housing, a tape cassette receiving drawer slidably mounted in the housing for movement between an open position and a closed position, resilient means biasing the drawer towards its open position, and latch means for retaining the drawer in its closed position, said latch means being of the push-push type whereby when the drawer is in its closed position the latch may be
released by momentarily moving the drawer against said
resilient means beyond its closed position whereupon
the latch will release permitting the drawer to move to
its open position under the action of said resilient
means, subsequent movement of the drawer to its closed
position against the action of said resilient means
causing the latch means to engage and retain the drawer
in the closed position, said latch means comprises an
elongate flexible limb on said drawer, said limb
extending in a plane parallel to the plane of the
drawer, being fixed at its front end to the drawer with
its rear end free, and being flexible whereby said free
end can be moved in a direction perpendicular to said
plane, and ramp and shoulder means on said housing,
said ramp and shoulder means co-operating with said
free end of said limb.

Desirably said limb is integral with said drawer.

Preferably said limb includes a transverse peg adjacent
its free end for co-operation with the ramp and
shoulder of said ramp and shoulder means.

The provision of push-push latch means removes the
necessity for a manually operable release member
exposed at the front of the drawer and ensures that the
drawer can be released for movement to its open
position by pressure applied at any point over the
front surface of the drawer. Thus the need for the
operator to locate a release member is obviated.

One example of the present invention is illustrated in
the accompanying drawings, wherein:
Figure 1 is a perspective view of a cassette container
having two drawers, one of which is shown in its open
position, the other being shown in the closed position;

Figure 2 is a sectional view to an enlarged scale illustrating the open drawer and a cassette carried thereby;

Figure 3 is a view to an enlarged scale of part of Figure 1 illustrating the push-push latch mechanism; and

Figures 4, 5 and 6 are fragmentary perspective views of an open drawer illustrating alternative arrangements.

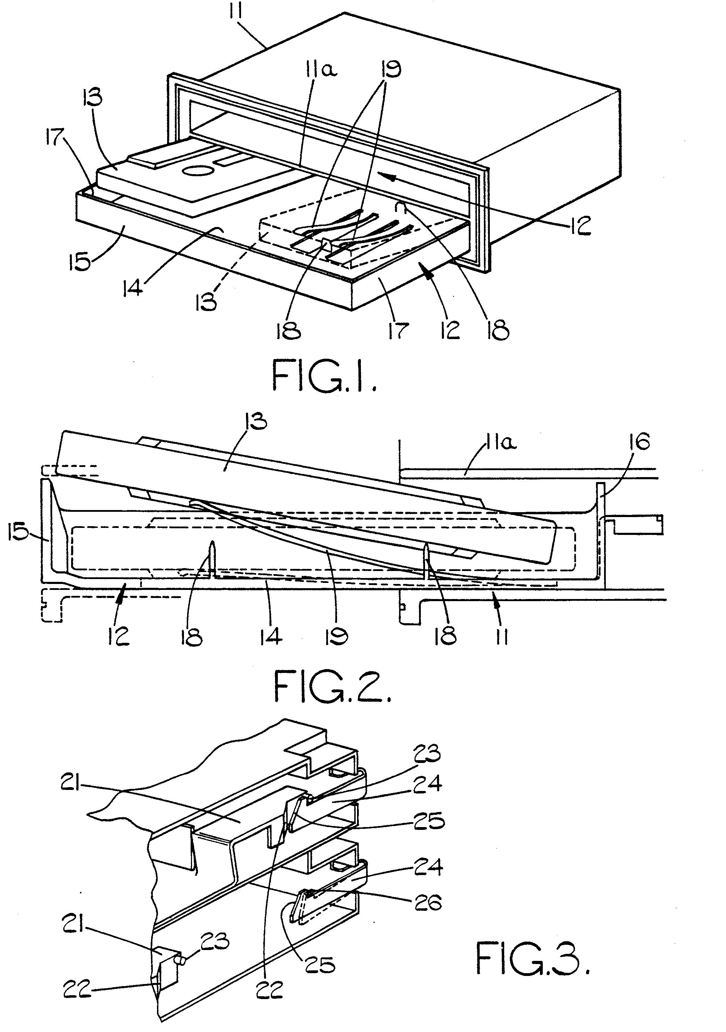

Referring first to Figures 1 to 3 of the accompanying drawings, there is shown a cassette container comprising a hollow moulded synthetic resin housing 11 containing two drawers 12 each of which can house two tape cassettes 13. Before proceeding further it is to be recognised that many alternative configurations are possible. Firstly, each drawer can be arranged to receive only a single cassette, or a plurality of cassettes, and each housing can be arranged to receive one, or a plurality, of drawers. Furthermore, the housing can be provided with alternative mounting means whereby the container is mounted in use. Each drawer 12 is moulded in synthetic resin material, and is in the form of a shallow tray having a base 14, and integral upstanding front and rear walls 15, 16 and side walls 17.

A latch mechanism (to be described in more detail hereinafter) can latch each drawer in a closed position relative to the housing 11 wherein the front face 15 of the drawer is flush, or substantially flush with the front face of the housing 11. A spring acting between the rear wall of the housing 11 and the rear wall 16 of the drawer urges the drawer forwardly to an open position in which the drawer protrudes from the housing as illustrated in Figure 1. A stop arrangement on each drawer and the housing limits the forward movement of the drawer under the action of the spring. This stop arrangement is not illustrated in the drawing, but can take any convenient form, preferably a releasable form facilitating initial insertion of a drawer into the housing, and subsequent removal of a drawer should this ever prove necessary.

The housing is formed with integral internal partition walls as shown for example at 11a whereby each drawer is slidable within its own compartment of the housing. Upstanding from the base of each drawer are first and second longitudinally spaced pegs 18 which, in use, mate with the apertures of the spools of a cassette 13 to locate the cassette in the desired position within the drawer, and the lock the spools against vibration and rotation in use.

The internal depth of each drawer 13 is sufficient to accommodate the thickness of a standard tape cassette, so that the drawer may be moved to its closed position while housing a cassette. As best seen in Figures 1 and 2 the base 14 of each drawer is formed with a pair of integral leaf springs 19 which bear against the underside of tape cassette housed within the drawer. The leaf springs 19 extend forwardly so that their free ends are disposed adjacent the front wall 15 of the drawer. Thus when a drawer is open, and a cassette housed therein is free of any impediment to vertical movement, then the leaf springs 19 will lift at least the front end of the cassette upwardly to protrude above the top edge of the front wall 15 of the drawer. It follows therefore that as the drawer opens the front end of the or each cassette housed by the drawer is increasingly presented upwardly above the level of the drawer to facilitate removal by an operator.

Conversely, during closing movement of a drawer the
upper surface of a cassette located within the drawer
will engage the partition wall 11a, and will be
depressed thereby against the action of the leaf
springs 19 so that the pegs 18 engage the spools of the
cassette, and the cassette is housed within the drawer.
In the closed position each cassette is urged lightly
by its respective leaf springs 19 into engagement with
either a partition wall 11a, or the top wall of the
housing 11, so obviating any tendency for the cassette
to rattle within the container. Moreover, as is clear
from the drawings if no cassette is present in the
drawer the springs 19 remain in the unstressed
positions and nothing protrudes from the drawer.

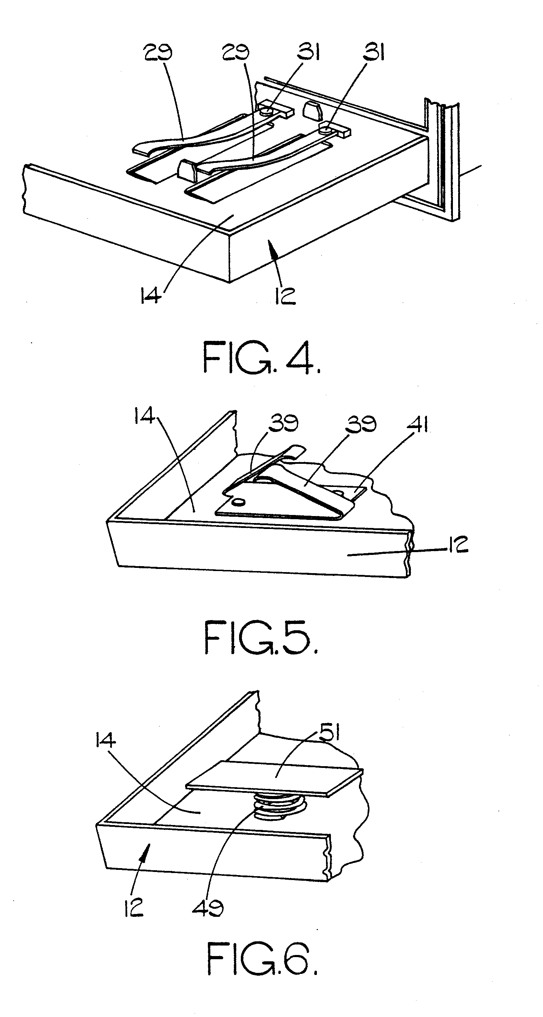

The preferred form of latch mechanism for retaining the
drawer in its closed position against the action of the
spring is a push-push type latch mechanism. Figure 3
which shows, in the upper half, a drawer latched by a
push-push latch mechanism, in its closed position, and
in its lower half a drawer in its open position.

As can be seen from Figure 3 each drawer is formed with
an integral, resilient, rearwardly extending limb 21
which can be flexed in a vertical direction, that is to
say a direction between the upper and lower walls of
the compartment within which the drawer is housed. One
edge of each limb 21 defines a ramp surface 22 and
rearwardly of the ramp surface each limb 21 carries a
laterally projecting peg 23.

For co-operation with the limb 21 of each drawer, each
compartment includes a forwardly projecting flexible,
resilient finger 24 conveniently formed as an integral
part of the rear wall of the compartment of the
housing. Each forwardly projecting finger 24 can be flexed laterally of its respective compartment and includes a ramp surface 25 at its forward end. Rearwardly of each ramp surface 25, each finger 24 is formed with a shoulder 26, and the operation of the latch mechanism is as follows. When the drawer is open the limb 21 assumes a rest condition as does the corresponding finger 24. In the rest positions of the limb 21 and the finger 24 the peg 23 of the limb 21 is aligned with the ramp 25 of the finger 24. Thus as the drawer is pushed back to its closed position the peg 23 will engage the ramp 25 shortly before the closed position is achieved. The finger 24 cannot flex vertically, and thus as the drawer is pushed to its closed position the peg 23 rides up the ramp 25 as permitted by vertical flexure of the limb 21. At the closed position the peg 23 aligns with the shoulder 26 and the limb 21 restores downwardly thus engaging the peg 23 behind the shoulder 24 and latching the drawer in its closed position. The peg 23 remains in contact with the shoulder 26 under the action of the spring pushing the drawer towards its open position.

In order to release the drawer for movement to its open position, it is necessary to depress the drawer further against the action of the spring, that is to say to push the drawer inwardly beyond its closed position. During this movement the peg 23 rides along the top surface of the finger 24 and the ramp 22 of the limb 21 engages the free end of the finger 24. The limb 21 cannot flex laterally, and thus the finger 24 is deflected laterally by the ramp 22 thus disengaging the finger laterally from the peg 23 and permitting the limb 21 to restore fully, vertically downwardly to its unstressed position. Thus the free end of the peg 23 abuts the inner face of the finger 24 preventing the finger 24 restoring back to its unstressed configuration. Upon release of finger pressure on the front of the drawer, the drawer is then free to move under the action of the spring to its open condition, and during the initial part of this movement the free end of the peg 23 slides on the inner face of the finger 24.

It will be recognised therefore that a push-push action is achieved which obviates the need for a manually displaceable release member forming part of the front surface of the drawer. Release pressure can be applied, in the closed position of the drawer, to any part of the front surface of the drawer to depress the drawer beyond its closed position to effect release of the latch means.

It will be recognised that other forms of push-push latch mechanism comprising a resilient limb on the drawer co-operating at its free end with a ramp and shoulder means on the housing could be utilized.

While it is convenient to produce the leaf springs 19 as integral parts of the base 14 of the or each drawer 12, it is to be understood that alternative arrangements are possible. Thus referring to Figure 4, the leaf springs could be in the form of resilient curved strips 29 formed separately from the drawer 12 and attached by rivets 31 at their rear ends to the base 14 of the drawer 12. Conveniently apertures would be provided beneath the leaf springs 29 to accommodate the curved portions of the leaf springs 29 when a cassette 13 is depressed into position in the drawer.

Figure 4 shows a further alternative arrangement wherein the leaf springs 39 extend laterally of the drawer 12 and are formed as integral parts of a metal pressing including an anchor plate 41 which is riveted to the base 14.

Figure 6 illustrates a still further arrangement wherein the leaf springs are replaced by a coil spring 49 and pressure pad 51. The pressure pad 51 engages beneath the front end of the cassette 13 and is pressed upwardly by the coil spring 49 which abuts, and is conveniently anchored to, the base 14 of the drawer 12.

If desired the housing 11 may be constructed as a series of individually, or unitarily, formed compartment structures received in a separately formed box-like nacelle. The nacelle structure can be of resilient, semi-rigid foam material so that it has impact absorbing properties.

Whilst the preferred form of cassette container incorporates both resilient means for lifting the cassette relative to the drawer in the open position of the drawer, and push-push latch means for holding the drawer in its closed position, it is to be understood that any of the cassette lifting arrangements can be utilized in a container which has a conventional latch arrangement rather than a push-push latch arrangement. Furthermore, the push-push latch arrangement can be used with advantage in a tape cassette container which has a known drawer structure.

CLAIMS:

1.     A tape cassette container comprises a housing (11), a tape cassette receiving drawer (12) mounted for sliding movement in the housing (11) between an open position and a closed position, resilient means urging the drawer (12) to its open position, and latch means (21-26) for retaining the drawer (12) in its closed position, characterised in that there is provided further resilient means (19) acting between the drawer (12) and a tape cassette (13) received therein for moving at least the front edge of the tape cassette (13) upwardly to protrude above the upper edge of the front of the drawer (12) when the drawer (12) is in its open position, the tape cassette (13) being depressed into the drawer (12) by engagement with an abutment surface (11;11a) of the container during movement of the drawer (12) towards its closed position.

2.     A container as claimed in claim 1 characterised in that said further resilient means includes leaf spring means (19;29;39).

3.     A container as claimed in claim 2 characterised in that said leaf spring means (19) is integral with the drawer (12).

4.     A container as claimed in claim 2 characterised in that said leaf spring means (29;39) is secured to the drawer (12).

5.     A container as claimed in claim 1 characterised in that said further resilient means includes coil spring means (49,51).

6.    A container as claimed in claim 5 characterised in that said coil spring means includes a coil spring (49) and a member (51) interposed between the cassette and one end of the spring (49) in use.

7.    A tape cassette container comprises a housing (11), a tape cassette receiving drawer (12) slidably mounted in the housing (11) for movement between an open position and a closed position, resilient means biasing the drawer (12) towards its open position, and latch means (21-26) for retaining the drawer in its closed position, said latch means being of the push-push type whereby when the drawer (12) is in its closed position the latch may be released by momentarily moving the drawer against said resilient means beyond its closed position whereupon the latch will release permitting the drawer (12) to move to its open position under the action of said resilient means, subsequent movement of the drawer to its closed position against the action of said resilient means causing the latch means to engage and retain the drawer in the closed position, characterised in that said latch means (21-26) comprises an elongate flexible limb (21) on said drawer (12), said limb extending in a plane parallel to the plane of the drawer (12), being fixed at its front end to the drawer with its rear end free, and being flexible whereby said free end can be moved in a direction perpendicular to said plane, and ramp and shoulder means (25,26) on said housing (11), said ramp and shoulder means (25,26) co-operating with said free end (22,23) of said limb (21).

8.    A container as claimed in claim 7 characterised in that said limb (21) is integral with said drawer (12).

9.    A container as claimed in claim 7 or claim 8 characterised in that said limb (21) includes a transverse peg (23) adjacent it sfree end for co-operation with the ramp (25) and said shoulder (26) of said ramp and shoulder means.

10.    A container as claimed in claim 7 characterised in that there is provided further resilient means (19) acting between the drawer (12) and the tape cassette (13) received therein, for moving at least the front edge of the tape cassette (13) upwardly to protrude above the upper edge of the front of the drawer (12) when the drawer (12) is in its open position, the tape cassette (13) being depressed into the drawer by engagement with an abutment surface (11;11a) of the container during movement of the drawer (12) towards its closed position.

0143609

1/2

FIG.1.

FIG.2.

FIG.3.

0143609

2/2

29    29    31    31

FIG.4.

14    39    39    41

12

FIG.5.

14    51

12    49

FIG.6.